# EUROPÄISCHE PATENTANMELDUNG

(11) **EP 2 045 619 A1**
(43) Veröffentlichungstag der Anmeldung: **08.04.2009**
(21) Anmeldenummer: 07018995.6
(22) Anmeldetag: 27.09.2007
(51) Int. Cl.: G01S 7/40

(54) **Fluidischer Zylinder mit einer Mikrowellen-Positionserfassungsanordnung für den Kolben**

(71) Anmelder: FESTO AG & Co. KG, 73734 Esslingen (DE)
(72) Erfinder: Reininger, Thomas, Dr. rer. nat., 73249 Wernau (DE); Maier, Marcus, Dipl.-Ing., 70565 Stuttgart (DE); Geisbusch, Lothar, Dr. Ing., 73760 Ostfildern (DE)
(74) Vertreter: Vetter, Hans

(57) **Zusammenfassung**

Es wird ein fluidischer Zylinder (10) mit einer Mikrowellen-Positionserfassungsanordnung für den Kolben (11) vorgeschlagen, mit einem Mikrowellengenerator (17), einer Sende-/ Empfangsantenne (23) am oder in einem Zylinderabschlussdeckel (14), einer Messeinrichtung (18) zur Bildung eines Positionssignals aus der von der Sende-/Empfangsantenne (23) zum Kolben hin laufenden und von dort reflektierten rücklaufenden Hohlleiterwelle und mit einer Auswerteeinrichtung (24). Wenigstens der Mikrowellengenerator (17) und die Auswerteeinrichtung (24) sind in einem räumlich vom Zylinderabschlussdeckel (14) entfernten Modul (16) angeordnet, das über wenigstens eine HF-Leitung (15) mit dem Zylinderabschlussdeckel (14) verbunden ist. Dadurch kann beim Einsatz des Zylinders (10) in heißer Umgebung das Modul (16) an einer entfernten kalten Stelle angeordnet werden und die darin enthaltenen Komponenten können aus Standardbauteilen für normale Temperaturen aufgebaut sein.

## Beschreibung

Die Erfindung betrifft einen fluidischen Zylinder mit einer Mikrowellen-Positionserfassungsanordnung für den Kolben, mit einem Mikrowellengenerator, einer Sende-/Empfangsantenne an oder in einem Zylinderabschlussdeckel, einer Messeinrichtung zur Bildung eines Positionssignals aus der von der Sende- /Empfangsantenne zum Kolben hin laufenden und von dort reflektierten rücklaufenden Hohlleiterwelle und mit einer Auswerteeinrichtung.

Bei einer derartigen, beispielsweise aus der EP 1040316 A2 bekannten Mikrowellen-Positionserfassungsanordnung sind die elektrischen oder elektronischen Komponenten, insbesondere die HF- und Mikrowellen-Komponenten, im oder am Zylinderabschlussdeckel angeordnet beziehungsweise in diesem integriert. Es gibt jedoch Anwendungsfälle, bei denen ein solcher Fluidikzylinder in einer heißen Umgebung arbeitet, beispielsweise in der Aluminiumindustrie. Dort bildet sich über dem flüssigen Aluminium eine Kruste aus Aluminiumoxid, die von Zeit zu Zeit aufgebrochen werden muss. Dies kann dadurch geschehen, dass eine durch einen Fluidikzylinder angetriebene Stange die Kruste in regelmäßigen Abständen durchstößt. Auch wenn kein direkter Kontakt zwischen dem flüssigen Aluminium und der Krustenbrecher-Einheit besteht, ist mit einer Erwärmung des Fluidikzylinders auf Temperaturen zu rechnen, die wesentlich über 100°C liegen. Auch das Fluid, das in den Zylinder strömt, kann entsprechende Temperaturen aufweisen.

Standard-Elektronikkomponenten sind für solche Temperaturbereiche nicht geeignet, wie sie im erwähnten Anwendungsfall als Krustenbrecher auftreten. Dies betrifft sowohl gängige Hochfrequenz-Bauteile als auch zum Beispiel die in der Auswerteeinrichtung verwendeten digitalen Signalprozessoren.

Eine Aufgabe der vorliegenden Erfindung besteht darin, eine Mikrowellen-Positionserfassungsanordnung für einen fluidischen Zylinder so auszubilden, dass der Zylinder in einer heißen Umgebung arbeiten kann, wie sie beispielsweise bei einer Ausbildung als Krustenbrecher in der Aluminiumherstellung auftreten.

Diese Aufgabe wird erfindungsgemäß durch einen fluidischen Zylinder mit einer Mikrowellen-Positionserfassungsanordnung für den Kolben mit den Merkmalen des Anspruchs 1 gelöst.

Die Vorteile der erfindungsgemäßen Lösung bestehen insbesondere darin, dass ein wesentlicher Teil der elektronischen Komponenten abgetrennt in einem so weit vom Zylinder entfernten Modul angeordnet ist, dass dort keine hohen Temperaturen herrschen und Standard-Elektronikkomponenten eingesetzt werden können. Je nach Ausführung betrifft dies einen mehr oder weniger großen Teil der Elektronikkomponenten und -schaltungen, da es aus Kostengründen vorteilhaft ist, einen möglichst großen Teil der Schaltung in einer Normaltemperatur-Ausführung realisieren zu können. Nur noch diejenigen Teile müssen als Hochtemperatur-Komponenten ausgelegt sein, für die eine Platzierung in unmittelbarer Nähe der Antenne erforderlich ist. Dies sind in der Regel jedoch nur einfache, passiv arbeitende und daher von Haus aus schon eher hochtemperaturfeste Bauelemente. Durch die entfernte Anordnung in einem separaten Modul ist auch ein relativ einfacher Austausch bei defekten Bauteilen möglich.

Durch die in den Unteransprüchen aufgeführten Maßnahmen sind vorteilhafte Weiterbildungen und Verbesserungen des im Anspruch 1 angegebenen Zylinders möglich.

Nachfolgend wird diejenige Komponente der Hochfrequenzschaltung als Messeinrichtung bezeichnet, die mittels eines Vergleichs der Phase von einer hin- und rücklaufenden Hochfrequenzwelle ein von dem Phasenunterschied abhängiges Signal auf Gleichstrom- oder Zwischenfrequenz-Ebene erzeugt, dass von der Auswerteschaltung weiter verarbeitet werden kann.

Um den Einfluss des relativ langen, als HF-Leitung ausgebildeten Verbindungskabels zwischen dem Modul und dem Zylinder auf das Messergebnis zu vermeiden, ist in vorteilhafter Weise eine Kompensationseinrichtung vorgesehen. Diese besteht in einer ersten vorteilhaften Ausgestaltung darin, dass auch die Messeinrichtung im abgetrennten Modul angeordnet ist und dass ein im oder am Zylinderabschlussdeckel angeordneter Umschalter in einer ersten Schaltstellung die Messeinrichtung über die HF-Leitung mit der Sende-/Empfangsantenne verbindet und in einer zweiten Schaltstellung die HF-Leitung kurzschließt. Durch diesen beispielsweise in regelmäßigen Abständen herbeigeführten Referenzkurzschluss während des Betriebs kann durch Differenzbildung der Einfluss der HF-Leitung auf das Messergebnis herauskalibriert werden. Der Umschalter ist zweckmäßigerweise als Relaisschalter oder Halbleiterschalter ausgebildet, wobei die HF-Leitung zweckmäßigerweise auch zur Übertragung der Steuersignale für den Umschalter ausgebildet ist, die insbesondere Gleichspannungssignale sendet.

In einer zweiten vorteilhaften Ausgestaltung der Kompensati-onseinrichtung beziehungsweise Kalibriereinrichtung sind die Messeinrichtung und eine Frequenzweiche im oder am Zylinderabschlussdeckel angeordnet und die HF-Leitung ist über diese Frequenzweiche mit der Messeinrichtung verbunden, wobei die HF-Leitung über eine entsprechende Frequenzweiche im Modul mit dem Mikrowellengenerator zur Übertragung der HF-Signale zur Messeinrichtung und mit der Auswerteeinrichtung zur Zuführung der von der Messeinrichtung kommenden Positionssignale verbunden ist. Die Messeinrichtung ist dabei in vorteilhafter Weise zur Bildung der Positionssignale als Gleichspannungssignale ausgebildet, wobei die Frequenzweichen dann als Gleichstrom-HF-Weichen ausgebildet sind. Da das Messsignal beziehungsweise Positionssignal bei dieser Ausführung in unmittelbarer räumlichen Nähe zur Antenne als Gleichspannungs-signal gebildet und als solches über die Frequenzweichen und die HF-Leitung zur Auswerteeinrichtung übertragen wird, tritt kein störender Einfluss der HF-Leitung unabhängig von deren Länge auf das Messergebnis auf. Der Vorteil gegenüber der ersten Variante besteht darin, dass kein kostenintensives und im Falle der Ausbildung als Relais vom mechanischen Verschleiß her problematisches Bauteil beziehungsweise kein hochtemperaturfester Halbleiter-HF-Schalter als Umschalter erforderlich ist. Demgegenüber lässt sich ein in der Messeinrichtung üblicherweise vorhandener Mischer zum Beispiel aus einfachen Dioden aufbauen, die wegen der geringen Verlustleistung und des einfacheren inneren Aufbaus gegenüber höheren Temperaturen toleranter sind als die aktiven Bauelemente.

Eine dritte vorteilhafte Variante der Erfindung stimmt weitgehend mit der zweiten Variante überein, jedoch werden die Positionssignale in der Messeinrichtung als ZF-Signale gebildet, wobei dann die Frequenzweichen als ZF-HF-Weichen ausgebildet sind. Dadurch lässt sich zum Beispiel eine Auswertung auf Basis eines I/Q-Mischers realisieren.

In vorteilhafter Weise kann bei der dritten Variante als Kompensationseinrichtung beziehungsweise Kalibriereinrichtung ein zweiter Mikrowellengenerator (Lokaloszillator) mit vom ersten Mikrowellengenerator abweichender Frequenz als Referenzfrequenz über eine zweite HF-Leitung entsprechend mit der Messeinrichtung verbunden sein, die zur Bildung eines Referenz-Positionssignals als ZF-Signal neben und entsprechend dem Positionssignal ausgebildet ist, wobei das Referenz-Positionssignal über die zweite HF-Leitung der Auswerteeinrichtung als Referenzwert zuführbar ist. Diese Ausgestaltung führt zu einer so hohen Messgenauigkeit, dass meistens auf einen Temperatursensor zur Temperaturkompensation verzichtet werden kann, der bei den beiden anderen Varianten zweckmäßigerweise, aber ebenfalls nicht zwingend vorzusehen ist.

Die zweite HF-Leitung verläuft zweckmäßigerweise zwischen zwei ZF-HF-Weichen im Modul einerseits und im oder am Zylinderabschlussdeckel andererseits.

Wird ein Temperatursensor im oder am Zylinderabschlussdeckel angeordnet, dessen Temperatursignal der Auswerteeinrichtung als Korrektursignal zugeführt wird, so erfolgt dies vorzugsweise über eine der HF-Leitungen oder über eine separate Leitung. Im Falle der Übertragung des als Gleichstromsignal ausgebildeten Temperatursignals über die HF-Leitung sind die damit verbundenen ZF-HF-Weichen zweckmäßigerweise als DC-ZF-HF-Weichen ausgebildet.

Die Messeinrichtung besteht zweckmäßigerweise aus wenigstens einem Richtkoppler und wenigstens einem Mischer, der zur Bildung von Positionssignalen als Gleichspannungssignale oder ZF-Signale aus dem HF-Signal des Mikrowellengenerators und dem über den Richtkoppler ausgekoppelten HF-Signal der rücklaufenden Hohlleiterwelle ausgebildet ist.

Drei Ausführungsbeispiele der Erfindung sind in der Zeichnung dargestellt und in der nachfolgenden Beschreibung näher erläutert. Es zeigen:
- Figur 1: ein Blockschaltbild eines ersten Ausführungsbeispiels der Erfindung mit einem Umschalter im Zylinderabschlussdeckel,
- Figur 2: ein Beispiel einer auch als HF-Frontend bezeichneten Messeinrichtung,
- Figur 3: das Blockschaltbild eines zweiten Ausführungsbeispiels der Erfindung, bei dem die Messeinrichtung im Zylinderabschlussdeckel angeordnet ist und die Positionssignale als Gleichspannungssignale rückgemeldet werden, und
- Figur 4: ein Blockschaltbild eines dritten Ausführungsbeispiels der Erfindung mit ebenfalls im Zylinderabschlussdeckel angeordneter Messeinrichtung, die die Positionssignale als ZF-Signale der Auswerteeinrichtung zuführt.

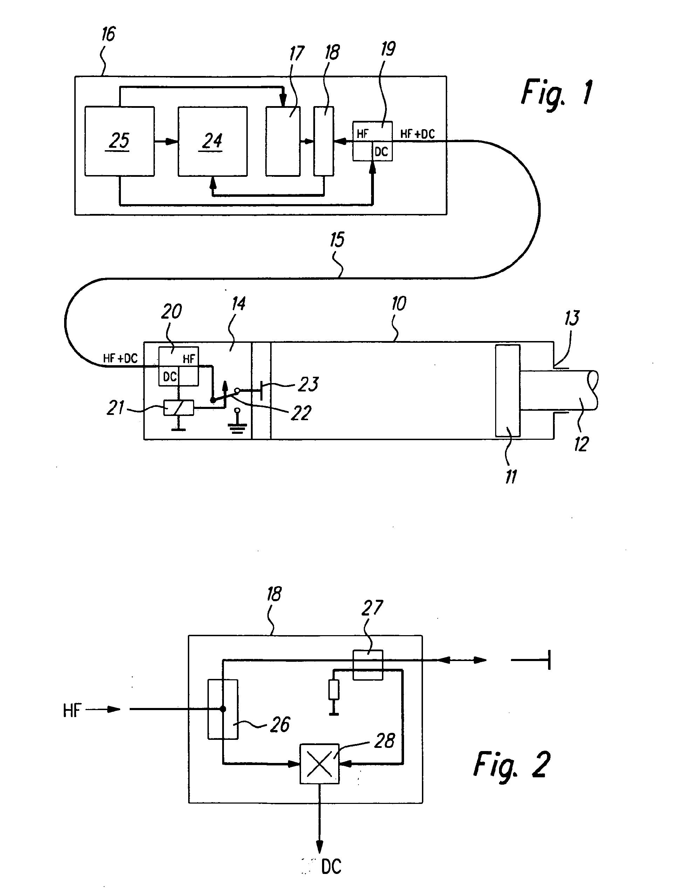

Bei dem in Figur 1 dargestellten ersten Ausführungsbeispiel ist ein fluidischer Zylinder 10 mit einem darin verschiebbar geführten Kolben 11 versehen, dessen Kolbenstange 12 an einem Zylinderende durch einen Lagerdeckel 13 hindurchgeführt ist. Der Zylinder 10 ist am gegenüberliegenden Ende durch einen Zylinderabschlussdeckel 14 abgeschlossen, in dem Teilkomponenten einer Mikrowellen-Positionserfassungsanordnung angeordnet sind. Der Zylinderabschlussdeckel 14 ist über eine HF-Leitung 15 (Hochfrequenzleitung) mit einem räumlich entfernt angeordneten Modul 16 versehen, in dem die übrigen Komponenten der Mikrowellen-Positionserfassungsanordnung angeordnet sind.

Der Zweck dieses Ausführungsbeispiels und auch der übrigen Ausführungsbeispiele besteht darin, dass der Zylinder 10 in einer Umgebung mit hohen Temperaturen über 100°C betrieben werden soll, beispielsweise in der Aluminiumherstellung, so-dass möglichst wenig Komponenten der Mikrowellen-Positionserfassungsanordnung am heißen oder heiß werdenden Zylinder 10 und die meisten Komponenten im Modul 16 angeordnet sind, das an einer kalten Stelle positioniert werden kann und daher Standardbauteile enthält, während im heißen Bereich am oder im Zylinderabschlussdeckel 14 hochtemperaturfeste elektrische beziehungsweise elektronische Bauteile eingesetzt werden müssen.

Im Modul 16 ist ein Mikrowellengenerator 17 über eine Messeinrichtung 18, wie sie später noch in Verbindung mit Figur 2 als Beispiel einer solchen Messeinrichtung ausführlicher erläutert wird, mit einer DC-HF-Weiche 19 (Gleichstrom-Hochfrequenz-Weiche) verbunden, die über die HF-Leitung 15 mit einer weiteren DC-HF-Weiche 20 im Zylinderabschlussdeckel 14 verbunden ist. Als HF-Leitung 15 eignet sich beispielsweise ein verlustarmes und für die hohen Umgebungstemperaturen geeignetes Koaxialkabel.

Über den DC-Ausgang der DC-HF-Weiche 20 wird ein Relais 21 gesteuert, das als Umschaltrelais ausgebildet ist. Ein Umschalter 22 des Relais 21 verbindet den HF-Anschluss der DC-HF-Weiche 20 wahlweise mit einer Sende-/Empfangsantenne 23 für Mikrowellen oder mit einem Masseanschluss, wobei in der mit dem Masseanschluss verbundenen Schaltstellung die HF-Leitung 15 für Hochfrequenzsignale kurzgeschlossen wird.

Anstelle eines temperaturstabilen Hochfrequenz-Koaxialrelais als Relais 21 kann auch eine Hochtemperatur-geeignete Hochfrequenzschaltung mit einfach aufgebauten konventionellen Halbleiterbauelementen, wie Dioden, zum Einsatz kommen. Die elektronische Lösung hat gegenüber dem Relais 21 den Vorteil, dass eine häufigere Kalibrierung, gegebenenfalls sogar im Takt mit der Update-Rate des Mikrowellen-Messvorgangs, möglich ist.

Im Modul 16 ist eine Auswerteeinrichtung 24 mit dem Messsignalausgang der Messeinrichtung 18 zur Auswertung des Messsignals beziehungsweise Positionssignals verbunden. Weiterhin ist eine Steuereinrichtung 25 zur Steuerung des Messvorgangs, insbesondere der Auswerteeinrichtung 24 und des Mikrowellengenerators 17, vorgesehen. Diese Steuereinrichtung 25 erzeugt auch die Gleichspannungs-Steuersignale zur Steuerung des Relais 21 und führt diese der DC-HF-Weiche 19 und damit der HF-Leitung 15 zu.

Anstelle der beiden DC-HF-Weichen 19, 20 kann die Steuereinrichtung 25 auch über ein einfaches zusätzliches Kabel mit dem Relais 21 oder einem elektronischen Umschalter zu dessen Steuerung verbunden sein.

In Figur 2 ist eine mögliche Ausgestaltung der Messeinrichtung 18 dargestellt. Das HF-Signal des Mikrowellengenerators 17 wird einem Leistungsteiler 26 zugeführt, der zum einen dieses HF-Signal über einen Richtkoppler 27 der Sende-/ Empfangsantenne 23 zuführt, gemäß dem ersten Ausführungsbeispiel über die beiden DC-HF-Weichen 19, 20, die HF-Leitung 15 und den Umschalter 22, und der zum anderen dieses HF-Signal einem Mischer 28 zuführt, der ein Vergleichssignal der rücklaufenden HF-Welle vom Richtkoppler 27 erhält. Der Mischer 28 erzeugt ein Gleichspannungs-Signal, das in Abhängigkeit der Position des Kolbens 11 steht und ein Positionssignal darstellt. Dieses wird der Auswerteeinrichtung 24 zur Auswertung zugeführt.

Das im Mikrowellengenerator 17 erzeugte HF-Signal wird als sogenannte TEM-Welle der Sende-/Empfangsantenne 23 zugeführt, die in dem Zylinderrohr des Zylinders 10 eine Hohlleiterwelle anregt. Die Hohlleiterwelle läuft zum Kolben, wird durch diesen reflektiert und läuft zurück zur Sende-/Empfangsantenne 23. Durch die Laufzeit der Hohlleiterwelle entsteht eine Phasenverschiebung, die im Mischer 28 erfasst wird und die ein Maß für die Kolbenposition darstellt.

Bei dem in Figur 1 dargestellten Ausführungsbeispiel befindet sich praktisch die komplette HF-Elektronik im räumlich entfernten Modul 16. Dies führt dazu, dass die Länge der HF-Leitung 15 mitgemessen wird. Die Strecke zwischen der Messeinrichtung 18, die auch als HF-Frontend bezeichnet wird, und dem Kolben, der die Reflexion der Mikrowellen bewirkt, umfasst auch die Kabellänge. Zwar kann die Kabellänge mit berücksichtigt werden, geringe Veränderungen in der Temperatur des Kabels oder bei Änderungen in der Kabelverlegung, zum Beispiel Änderungen der Stellen, an denen das Kabel gebogen wird oder Änderungen des Biegeradius, führen jedoch zu einer nennenswerten Verfälschung des Positionsmessergebnisses. Um dies zu verhindern, wird in hinreichend kurzen, regelmäßigen Zeitabständen während des Betriebs der Messanordnung der Einfluss der HF-Leitung 15 durch den Umschalter 22 herauskalibriert. Dieser erzeugt in seiner Kurzschlussstellung einen Referenz-Kurzschluss am Fußpunkt oder in der Nähe des Fußpunkts der Sende-/Empfangsantenne 23, sodass in dieser Stellung die Reflexion bereits am Antennenfußpunkt und nicht erst am Kolben erfolgt. Aus der gemessenen Entfernung kann auf den momentanen Einfluss der HF-Leitung 15 geschlossen werden. Anschließend wird der Kurzschluss wieder aufgehoben durch Betätigung des Relais 21, sodass wieder die eigentliche Kolbenposition gemessen wird. Die Differenz zwischen dem eigentlichen Messergebnis und der Referenzmessung ergibt den kalibrierten Abstand zwischen der Sende-/Empfangsantenne 23 und dem Kolben 11 und ist ein exaktes Maß für die Kolbenposition.

Bei der Relaisausführung wird zum Beispiel einmal pro Minute eine Referenzmessung beziehungsweise Kurzschlussmessung durchgeführt. Bei einer elektronischen Lösung kann die Rate der Kalibriermessungen wesentlich größer sein, zum Beispiel mehrere 100/Sekunde.

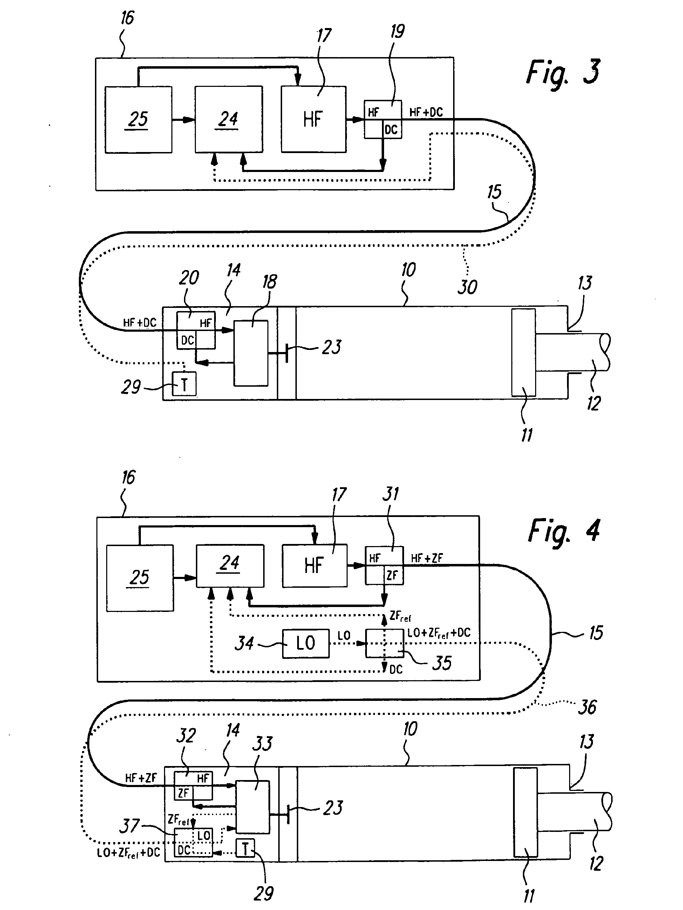

Bei dem in Figur 3 dargestellten zweiten Ausführungsbeispiel sind gleiche Bauteile und Baugruppen mit denselben Bezugszeichen versehen und nicht nochmals beschrieben. Im Unterschied zum ersten Ausführungsbeispiel entfällt das Relais 21 beziehungsweise der Umschalter 22 und die Messeinrichtung 18 ist im Zylinderabschlussdeckel 14 angeordnet. Diese Messeinrichtung 12 (HF-Frontend) ist somit beim eingangs erwähnten Einsatz hohen Temperaturen ausgesetzt und muss daher aus hochtemperaturbeständigen Bauteilen aufgebaut sein. Um Temperatureinflüsse bei der Messung auszuschalten, ergibt sich dadurch die Notwendigkeit des Einsatzes eines Temperatursensors 29. Dieser ist über eine separate Leitung 30 mit einem Eingang der Auswerteeinrichtung 24 verbunden, wobei das Temperaturmesssignal zur temperaturabhängigen Korrektur des Positionsmesssignals in der Auswerteeinrichtung 24 herangezogen wird.

Das in der Messeinrichtung 18 beziehungsweise in deren Mischer 28 erzeugte Positionssignal wird als DC-Signal (Gleichspannungssignal) über die DC-HF-Weiche 20, die HF-Leitung 15 und die DC-HF-Weiche 19 der Auswerteeinrichtung 24 zugeführt. Zur Umwandlung des Mischersignals in der Messeinrichtung 18 in ein DC-Signal dient der Mischer 28.

An dieser Stelle sei noch erwähnt, dass auch beim ersten Ausführungsbeispiel ein Temperatursensor 29 und eine entsprechende Anordnung zur Temperaturkompensation vorgesehen sein können, obwohl diese dort nicht unbedingt erforderlich sind.

Bei dem in Figur 4 dargestellten dritten Ausführungsbeispiel sind wiederum gleiche oder gleichwirkende Bauteile und Baugruppen mit denselben Bezugszeichen versehen und nicht nochmals beschrieben. Im Unterschied zum zweiten Ausführungsbeispiel sind die beiden DC-HF-Weichen 19, 20 durch zwei ZF-HF-Weichen 31, 32 ersetzt, wobei die ZF-HF-Weiche 32 im Zylinderabschlussdeckel 14 über eine modifizierte Messeinrichtung 33 mit der Sende-/Empfangsantenne 23 verbunden ist. Zusätzlich ist im Modul 16 ein sogenannter Lokaloszillator 34 angeordnet, der eine von der des Mikrowellengenerators 17 abweichende Hochfrequenz erzeugt, die zur Unterscheidung als Lokaloszillatorfrequenz LO bezeichnet wird. Beispielsweise beträgt die Frequenz des Mikrowellengenerators 17 5 GHz und die des Lokaloszillators 34 4,8 GHz. Dieser Lokaloszillator 34 ist über eine DC-ZF-HF-Weiche 35 im Modul 16 und über eine zusätzliche zweite HF-Leitung 36 mit einer entsprechenden DC-ZF-HF-Weiche 37 im Zylinderabschlussdeckel 14 verbunden, die ihrerseits mit der Messeinrichtung 33 verbunden ist und an die der Temperatursensor 29 angeschlossen ist.

Die Positions-Rohdaten werden bei diesem Ausführungsbeispiel nicht als DC-Signale, sondern als ZF-Signale von der Messeinrichtung 33 über die beiden DC-ZF-HF-Weichen 37, 35 zur Auswerteeinrichtung 24 übertragen. Bei einer solchen Lösung besteht das Problem, dass aufgrund der gegebenenfalls recht langen HF-Leitung 15 eine unkalkulierbare und temperaturabhängige Phasenverschiebung entsteht, die das Messergebnis verfälscht. Dem wird gemäß dem dritten Ausführungsbeispiel dadurch begegnet, dass neben den Positions-Rohdaten auf ZF-Ebene zusätzlich ein Referenzsignal auf ZF-Ebene übertragen wird. Dieses Referenzsignal ZF_{ref} wird mittels der DC-ZF-HF-Weichen 35, 37 und der HF-Leitung 36, die der HF-Leitung 15 entspricht, ebenfalls auf die Auswerteeinrichtung 24 übertragen und dient als Kompensationssignal beziehungsweise Korrektursignal. Hierzu wird in der modifizierten Messeinrichtung 33 das Referenzsignal ZF_{ref} als Differenzsignal zwischen dem HF-Signal und dem LO-Signal gebildet. Die Messeinrichtung 33 benötigt hierzu einen zweiten Mischer und eventuell auch einen zweiten Richtkoppler.

Das Temperatursignal des Temperatursensors 29 wird ebenfalls über die zweite HF-Leitung 36 zur Auswerteeinrichtung 24 übertragen und dient zur zusätzlichen Temperaturkompensation, wobei diese im Hinblick auf das Referenzsignal ZF_{ref} nicht unbedingt erforderlich ist.

Es sei noch erwähnt, dass der Mikrowellengenerator 17 und auch der Lokaloszillator 34 üblicherweise noch einen HF-Verstärker beinhalten, um ein HF-Signal mit der gewünschten Amplitude zu erhalten. Weiterhin erzeugt der Mikrowellengenerator 17 üblicherweise mehrere HF-Signale unterschiedlicher Frequenz, um Mehrdeutigkeiten beim gemessenen Positionssignal zu vermeiden. In bekannter Weise werden dabei z.B. bis zu sechs verschiedene Frequenzen verwendet.

## Patentansprüche

1. Fluidischer Zylinder mit einer Mikrowellen-Positionserfassungsanordnung für den Kolben, mit einem Mikrowellengenerator (17), einer Sende-/Empfangsantenne (23) an oder in einem Zylinderabschlussdeckel (14), einer Messeinrichtung (18) zur Bildung eines Kolben-Positionssignals aus der von der Sende-/Empfangsantenne (23) zum Kolben (11) hin laufenden und von dort reflektierten rücklaufenden Hohlleiterwelle und mit einer Auswerteeinrichtung (24), **dadurch gekennzeichnet, dass** wenigstens der Mikrowellengenerator (17) und die Auswerteeinrichtung (24) in einem räumlich vom Zylinderabschlussdeckel (14) entfernten Modul (16) angeordnet sind, das über wenigstens eine HF-Leitung (15) mit der Sende-/Empfangsantenne (23) und/oder anderen elektrischen Komponenten der Mikrowellen-Positionserfassungsanordnung im oder am Zylinderabschlussdeckel (14) verbunden ist.

2. Fluidischer Zylinder nach Anspruch 1, **dadurch gekennzeichnet, dass** eine Kalibriereinrichtung zur Kompensation von durch die HF-Leitung (15) bewirkten Messfehlern vorgesehen ist.

3. Zylinder nach Anspruch 1 oder 2, **dadurch gekennzeichnet, dass** auch die Messeinrichtung (18) im Modul (16) angeordnet ist und dass als Kalibriereinrichtung ein im oder am Zylinderabschlussdeckel (14) angeordneter Umschalter (22) in einer ersten Schaltstellung die Messeinrichtung (18) über die HF-Leitung (15) mit der Sende-/Empfangsantenne (23) verbindet und in einer zweiten Schaltstellung die HF-Leitung (15) kurzschließt.

4. Zylinder nach Anspruch 3, **dadurch gekennzeichnet, dass** der Umschalter (22) als Relaisschalter oder Halbleiterschalter ausgebildet ist und dass die HF-Leitung (15) zur Übertragung auch der Steuersignale für den Umschalter (22) ausgebildet ist, wobei die Steuersignale insbesondere Gleichspannungssignale sind.

5. Zylinder nach Anspruch 1 oder 2, **dadurch gekennzeichnet, dass** die Messeinrichtung (18; 33) und eine Frequenzweiche (20; 32) am oder im Zylinderabschlussdeckel (14) angeordnet sind und die HF-Leitung (15) über diese Frequenzweiche (20; 32) mit der Messeinrichtung (18; 33) verbunden ist, wobei die HF-Leitung (15) über eine entsprechende Frequenzweiche (19; 31) im Modul (16) mit dem Mikrowellengenerator (17) zur Übertragung der HF-Signale zur Messeinrichtung (18; 33) und mit der Auswerteeinrichtung (24) zur Zuführung der von der Messeinrichtung (18; 33) kommenden Positionssignale verbunden ist.

6. Zylinder nach Anspruch 5, **dadurch gekennzeichnet, dass** die Messeinrichtung (18) zur Bildung der Positionssignale als Gleichspannungssignale ausgebildet ist und dass die Frequenzweichen (19, 20) als Gleichstrom-HF-Weichen ausgebildet sind.

7. Zylinder nach Anspruch 5, **dadurch gekennzeichnet, dass** die Messeinrichtung (33) zur Bildung der Positionssignale als ZF-Signale ausgebildet ist und dass die Frequenzweichen (31, 32) als ZF-HF-Weichen ausgebildet sind.

8. Zylinder nach Anspruch 7, **dadurch gekennzeichnet, dass** ein zweiter Mikrowellengenerator (34) mit vom ersten Mikrowellengenerator (17) abweichender Frequenz als Referenzfrequenz (LO) über eine zweite HF-Leitung (36) entsprechend mit der Messeinrichtung (33) verbunden ist, die zur Bildung eines Referenz-Positionssignals (ZF_{ref}) als ZF-Signal neben und entsprechend dem Positionssignal (ZF) ausgebildet ist, wobei das Referenz-Positionssignal (ZF_{ref}) über die zweite HF-Leitung (36) der Auswerteeinrichtung (24) als Referenzwert zuführbar ist.

9. Zylinder nach Anspruch 8, **dadurch gekennzeichnet, dass** die zweite HF-Leitung (36) zwischen zwei ZF-HF-Weichen (35, 37) im Modul (16) einerseits und im oder am Zylinderabschlussdeckel (14) andererseits verläuft.

10. Zylinder nach einem der vorhergehenden Ansprüche, **dadurch gekennzeichnet, dass** ein Temperatursensor (29) im oder am Zylinderabschlussdeckel (14) angeordnet ist, dessen Temperatursignal der Auswerteeinrichtung (24) als Korrektursignal vorzugsweise über eine der HF-Leitungen (36) oder über eine separate Leitung (30) zuführbar ist.

11. Zylinder nach Anspruch 10, **dadurch gekennzeichnet, dass** zur Weiterleitung des als Gleichspannungssignal ausgebildeten Temperatursignals über die HF-Leitung (36) die damit verbundenen ZF-HF-Weichen (35, 37) als DC-ZF-HF-Weichen ausgebildet sind.

12. Zylinder nach einem der vorhergehenden Ansprüche, **dadurch gekennzeichnet, dass** die Messeinrichtung (18; 33) aus wenigstens einem Richtkoppler (27) und wenigstens einem Mischer (28) besteht, der zur Bildung von Positionssignalen als Gleichspannungssignale oder ZF-Signale aus dem HF-Signal des Mikrowellengenerators (17) und dem über den Richtkoppler (27) ausgekoppelten HF-Signal der rücklaufenden Hohlleiterwelle ausgebildet ist.

13. Zylinder nach einem der vorhergehenden Ansprüche, **dadurch gekennzeichnet, dass** die im oder am Zylinderabschlussdeckel (14) angeordneten Bauteile und Komponenten eine höhere Temperaturfestigkeit als gewöhnliche Elektronikkomponenten aufweisen, insbesondere hochtemperaturfest ausgebildet sind.
